# EUROPÄISCHE PATENTSCHRIFT

(11) **EP 2 463 142 B1**
(45) Veröffentlichungstag und Bekanntmachung des Hinweises auf die Patenterteilung: **23.01.2019**
(21) Anmeldenummer: 11192826.3
(22) Anmeldetag: 09.12.2011
(51) Int. Cl.: B60N 2/22, B60N 2/68

(54) **Verstelleinrichtung für einen Fahrzeugsitz zur Neigungsverstellung einer Rückenlehne des Fahrzeugsitzes gegenüber einem Sitzteil**
Adjustment device for a vehicle seat for adjusting the angle of a backrest of the vehicle seat relative to a seat component
Dispositif de réglage pour un siège de véhicule destiné au réglage de l'inclinaison d'un dossier de siège de véhicule par rapport à une partie assise

(30) Priorität: 09.12.2010 DE 102010053995
(43) Veröffentlichungstag der Anmeldung: 13.06.2012
(73) Patentinhaber: Adient Luxembourg Holding S.à r.l., 1855 Luxembourg (LU)
(72) Erfinder: Abraham, James, 51147 Köln (DE); Chirayil, Abhilash, 51379 Leverkusen (DE); Medved, Andrej, 82107 Bratislava (SK)
(74) Vertreter: Liedtke, Markus

(56) Entgegenhaltungen:
- EP-A2- 0 316 193
- WO-A1-2007/123367
- DE-A1-102008 024 853
- DE-B3-102005 062 899
- FR-A1- 2 798 099
- FR-A1- 2 873 633

## Beschreibung

Die Erfindung betrifft eine Verstelleinrichtung für einen Fahrzeugsitz zur Neigungsverstellung einer Rückenlehne des Fahrzeugsitzes gegenüber einem Sitzteil gemäß dem Oberbegriff des Anspruchs 1. Weiterhin betrifft die Erfindung einen Fahrzeugsitz mit einer derartigen Verstelleinrichtung gemäß dem Oberbegriff des Anspruchs 15.

Die DE 10 2005 062 899 B3 beschreibt eine Wellen-Naben-Verbindungsstruktur, die eine stabile und geräuscharme Bewegung der Welle und der Nabe sicherstellt, eine hinreichende Festigkeit der Welle gewährleistet und die einen Montageprozess zum Koppeln der Welle mit der Nabe ermöglicht, der einfach und korrekt auszuführen ist.

Aus der EP 0 316 193 A2 ist eine verstellbare Sitzvorrichtung bekannt, die folgende Elemente aufweist: zwei Stützplatten zur Befestigung am Sitz und an der Sitzlehne, wobei die erste der Stützplatten einen in dieser gebildeten, konkav geformten Zahnradkranz hat, während auf der zweiten Stützplatte eine konvex geformte Zahnradscheibe gebildet wird, und einen exzentrischen Drehnocken, der so angeordnet ist, dass er bei der Nutzung das rollende Eingreifen der Zähne der Zahnradscheibe in die Zähne des Zahnradkranzes bewirkt, um die Stützplatten im Verhältnis zueinander zu bewegen, wobei die Zähne des Zahnradkranzes und der Zahnradscheibe eine allgemein halbkreisförmige Form haben, wobei die Zahnradscheibe getrennt von der zweiten Stützplatte ausgeführt und mit dieser durch Mittel verbunden wird, die das Drehmoment von der Zahnradscheibe auf die zweite Stützplatte übertragen.

Aus der FR 2 798 099 A1 ist ein Fahrzeugsitz bekannt, umfassend zwei Armaturen, die mittels eines Gelenkmechanismus gegeneinander um eine Rotationsachse schwenkbar ausgebildet sind, wobei der Gelenkmechanismus zwei feste Flansche umfasst, die an den Armaturen des Sitzes befestigt sind, wobei mindestens einer der Flansche äußere Reliefs aufweist, die rund um die Rotationsachse angeordnet sind und die mit komplementären Reliefs der korrespondierenden Armatur verschachtelt sind. Dieser Flansch ist auch fest verbunden mit einem einzigen zentralen Befestigungsorgan, auf dem ein mit einem Gewinde versehenes Befestigungsorgan aufgeschraubt ist, welches einen Kragenring gegen die Armatur des Sitzes in Richtung des Flansches anlegt.

Aus der WO 2007/123367 A1 ist ein Sitzversteller für Fahrzeuge bekannt. Der Sitzversteller umfasst ein Sektorzahnrad, das ein Sitzlehnen-Kupplungsteil aufweist, und einen Halter, der drehbar an das Zahnsegment gekoppelt ist und einen Sitzpolster-Kupplungsteil aufweist. Der Sitzversteller umfasst ferner einen Nocken, der durch eine Welle gedreht wird, ein Sperrzahnrad, welches das Zahnsegment lösbar an dem Halter verriegelt, und eine Rückstellfeder, die den Nocken elastisch in seine Ausgangsposition spannt. Das Sitzlehnen-Kupplungsteil umfasst einen Hauptkörper, der aus dem Sektor-Zahnrad hervorsteht, und Kupplungszähne, die auf dem Hauptkörper in vorbestimmten Intervallen vorgesehen sind.

Aufgabe der vorliegenden Erfindung ist es, eine gegenüber dem Stand der Technik verbesserte Verstelleinrichtung für einen Fahrzeugsitz zur Neigungsverstellung einer Rückenlehne des Fahrzeugsitzes gegenüber einem Sitzteil und einen verbesserten Fahrzeugsitz mit einer derartigen Verstelleinrichtung anzugeben.

Hinsichtlich der Verstelleinrichtung wird die Aufgabe durch die im Anspruch 1 angegebenen Merkmale gelöst.

Hinsichtlich des Fahrzeugsitzes wird die Aufgabe durch die im Anspruch 13 angegebenen Merkmale gelöst.

Vorteilhafte Weiterbildungen der Erfindung sind Gegenstand der Unteransprüche.

Bei der Verstelleinrichtung für einen Fahrzeugsitz zur Neigungsverstellung einer Rückenlehne des Fahrzeugsitzes gegenüber einem Sitzteil umfasst ein Beschlagteil erfindungsgemäß ein am Außenumfang keilwellenartig ausgeformtes Formschlussmittel, welches unter Ausbildung eines Drehformschlusses in eine korrespondierend ausgeformte Aufnahme des Sitzteils einschiebbar ist. Auf diese Weise ist eine einfache und insbesondere lösbare Anordnung des Beschlagteils an der Aufnahme des Sitzteils ermöglicht.

Dadurch sind vorteilhafterweise die Produktionszeiten einer solchen Verstelleinrichtung und/oder eines Fahrzeugsitzes mit einer solchen Verstelleinrichtung signifikant verringerbar.

Zweckmäßigerweise ist das Beschlagteil gestellfest form-, stoff- und/oder kraftschlüssig an der Rückenlehne des Fahrzeugsitzes angeordnet. Somit können alle aus dem Stand der Technik bekannten und bewährten Befestigungsverfahren zur Anordnung des Beschlagteils an der Rückenlehne verwendet werden. Beispielsweise können Beschlagteil und Rückenlehne verschweißt, verklebt, verschraubt und/oder vernietet werden.

Vorteilhafterweise ist das Formschlussmittel dreh- oder schwenkbar im Beschlagteil gehalten und/oder gelagert. Dabei kann das Formschlussmittel mittels eines herkömmlichen Klinkenmechanismus relativ zum Beschlagteil gedreht oder rotiert werden.

Besonders vorteilhafterweise sind Beschlagteil und Aufnahme des Sitzteils derart am Fahrzeugsitz angeordnet, dass ein Einschieben des Formschlussmittels in die Aufnahme des Sitzteils horizontal und quer zu einer Sitzrichtung erfolgt. Auf diese Weise ist eine besonders einfache Montage der Verstelleinrichtung und/oder des Fahrzeugsitzes mit dieser Verstelleinrichtung ermöglicht.

In einer vorteilhaften Ausführungsform weist das Formschlussmittel eine axial verlaufende Durchgangsbohrung auf, in welcher eine Sicherungseinrichtung angeordnet ist, welche das Formschlussmittel und die zugeordnete Aufnahme nach dem Fügen hinsichtlich ihrer axialen Lage zueinander form- und/oder kraftschlüssig fixiert. Somit ist ein unbeabsichtigtes Auftrennen der form- und/oder kraftschlüssigen Verbindung zwischen Formschlussmittel und Aufnahme sicher vermieden.

In einer besonders vorteilhaften Ausführungsform ist die Sicherungseinrichtung aus zwei ineinander verrastbaren Stopfen gebildet, welche von verschiedenen Seiten in die Durchgangsbohrung eingeführt und anschließend verrastet sind. Dadurch ist eine werkzeuglos zu montierende und mehrfach lösbare Sicherungseinrichtung geschaffen.

Erfindungsgemäß sind am Außenumfang des keilwellenartig ausgeformten Formschlussmittels eine Vielzahl von Zähnen ausgebildet, welche in regelmäßigen Winkelabständen voneinander beabstandet sind.

Erfindungsgemäß weist ein Zahn des Formschlussmittels eine von den übrigen Zähnen des Formschlussmittels abweichende asymmetrische Geometrie und/oder Kontur auf, während die übrigen Zähne eine symmetrische Geometrie und/oder Kontur aufweisen.

Dabei ist an einem Übergang zwischen einer Flanke des Zahns und einem Zahngrund ein Übergangsbereich derart ausgebildet, dass an diesem Zahn eine verringerte Zahntiefe ausgebildet ist.

Der Übergangsbereich ist besonders vorteilhafterweise als eine flächige Erweiterung eines herkömmlichen verrundeten Übergangs zwischen einer Flanke und einem Zahngrund der übrigen Zähne ausgebildet. Diese flächige Erweiterung überragt somit die übliche Zahnflanke und bildet derart eine kraftschlüssige Verbindung, insbesondere Verpressung, mit der Aufnahme des Sitzteils aus, wodurch ein radiales Spiel der Verstelleinrichtung reduziert ist.

Besonders bevorzugt ist der Übergangsbereich rampenförmig mit einem stirnseitigen Anstieg ausgeformt. Bedingt durch den stirnseitigen Anstieg ist ein Fügen des Formschlussmittels in die Aufnahme des Sitzteils vereinfacht.

Zweckmäßigerweise weist die korrespondierend zum Formschlussmittel ausgeformte Aufnahme des Sitzteils eine symmetrische Geometrie und/oder Kontur auf. Dadurch ist eine kraftschlüssige Verbindung, insbesondere Verpressung, des Übergangsbereichs mit der Aufnahme des Sitzteils ermöglicht.

Beim Fahrzeugsitz mit einer Verstelleinrichtung ist die Verstelleinrichtung erfindungsgemäß an zumindest einer Seite des Fahrzeugsitzes mit einer Sitzstruktur gekoppelt und an der gegenüberliegenden Seite des Fahrzeugsitzes ist ein herkömmliches Scharnier angeordnet. Dadurch ist eine Neigungsverstellung der Rückenlehne des Fahrzeugsitzes gegenüber dem Sitzteil mittels einer einzelnen Verstelleinrichtung ermöglicht, wodurch die Herstellungskosten reduzierbar sind.

Anhand der beigefügten schematischen Figuren wird die Erfindung näher erläutert.

Dabei zeigen:
- Figur 1: schematisch eine perspektivische Darstellung einer erfindungsgemäßen Verstelleinrichtung für einen Fahrzeugsitz,
- Figur 2: schematisch eine perspektivische Darstellung einer erfindungsgemäßen Verstelleinrichtung für einen Fahrzeugsitz aus einem anderen Blickwinkel,
- Figur 3: schematisch eine Schnittdarstellung einer erfindungsgemäßen Verstelleinrichtung für einen Fahrzeugsitz,
- Figur 4: schematisch eine Explosionsdarstellung einer erfindungsgemäßen Verstelleinrichtung für einen Fahrzeugsitz,
- Figur 5: schematisch eine perspektivische Darstellung eines Formschlussmittels und
- Figur 6: schematisch eine Schnittdarstellung eines Formschlussmittels und der korrespondierenden Aufnahme.

Einander entsprechende Teile sind in allen Figuren mit den gleichen Bezugszeichen versehen.

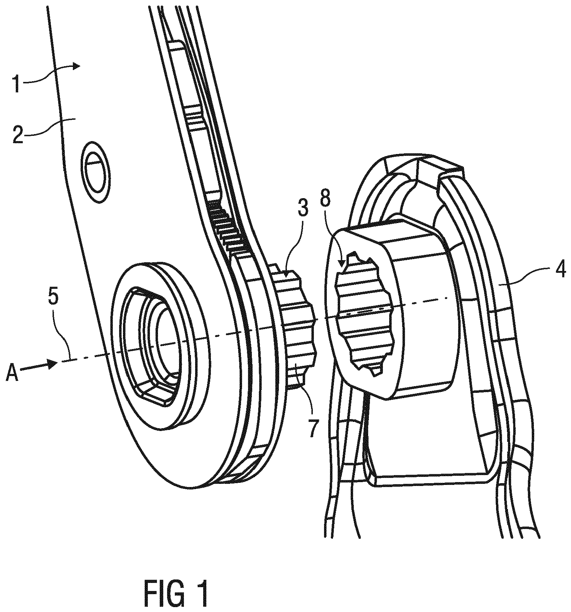

Figur 1 zeigt schematisch eine perspektivische Darstellung der erfindungsgemäßen Verstelleinrichtung 1 für einen Fahrzeugsitz, die aus einem mit der Rückenlehne starr oder gestellfest verbindbaren Beschlagteil 2 und einem wellenartigen Formschlussmittel 3 zum drehfesten Anschluss an das Sitzteil 4 besteht. Beschlagteil 2 und Formschlussmittel 3 sind um eine Achse 5 zueinander dreh- oder schwenkbar und hinsichtlich ihrer Drehstellung durch einen an sich bekannten Klinkenmechanismus 6 einstellbar.

Das wellenartige Formschlussmittel 3 weist ein keilwellenförmiges Profil mit Zähnen 7 auf, die in eine komplementär gestaltete Aufnahme 8 am Sitzteil 4 in axialer Richtung A einschiebbar sind. Die Rückenlehne ist nach dem Fügen von Formschlussmittel 3 und Aufnahme 8 hinsichtlich ihrer Drehstellung gegenüber dem Sitzteil 4 einstellbar festgelegt.

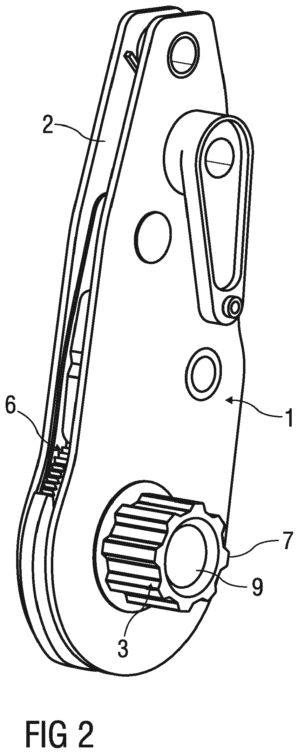

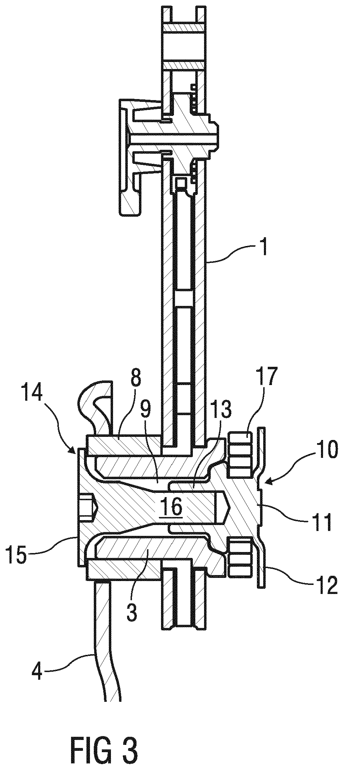

Figur 2 zeigt die Verstelleinrichtung 1 isoliert in perspektivischer Darstellung aus einer anderen Blickrichtung. Das Formschlussmittel 3 ist, wie in Verbindung mit der Schnittdarstellung nach Figur 3 ersichtlich, mit einer Durchgangsbohrung 9 versehen, durch welche eine Sicherungseinrichtung 10 zur axialen Sicherung von Formschlussmittel 3 und Aufnahme 8 geführt ist.

Die Sicherungseinrichtung 10 besteht aus einem ersten Stopfen 11 mit einem Teller 12 und einem kragenartigen Vorsprung 13, welcher in die Durchgangsbohrung 9 eingeführt wird. Von der gegenüberliegenden Seite wird ein zweiter Stopfen 14 in die Durchgangsbohrung 9 eingeschoben, der mit einem Teller 15 und einem von diesem abragenden Stift 16 versehen ist. Der Stift 16 wird beim Einsetzen der Stopfen 11, 14 in dem kragenförmigen Vorsprung 13 verrastet, so dass die Teller 12, 15 Formschlussmittel 3 und Aufnahme 8 in axialer Richtung zueinander festlegen. Der Stopfen 11 nimmt im Bereich des Tellers 12 ferner ein spiralförmiges Federmittel 17 zum Vorspannen der Verstelleinrichtung 1 auf.

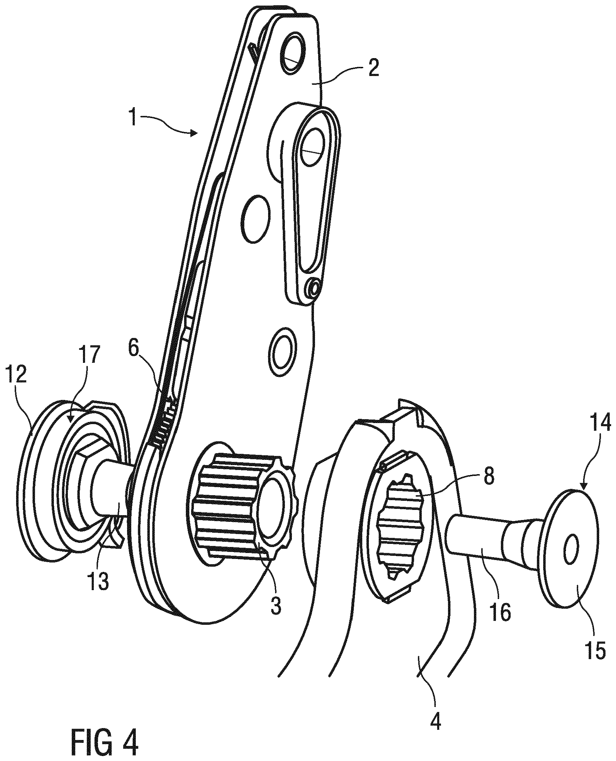

Figur 4 zeigt schematisch eine Explosionsdarstellung einer erfindungsgemäßen Verstelleinrichtung 1 für einen Fahrzeugsitz.

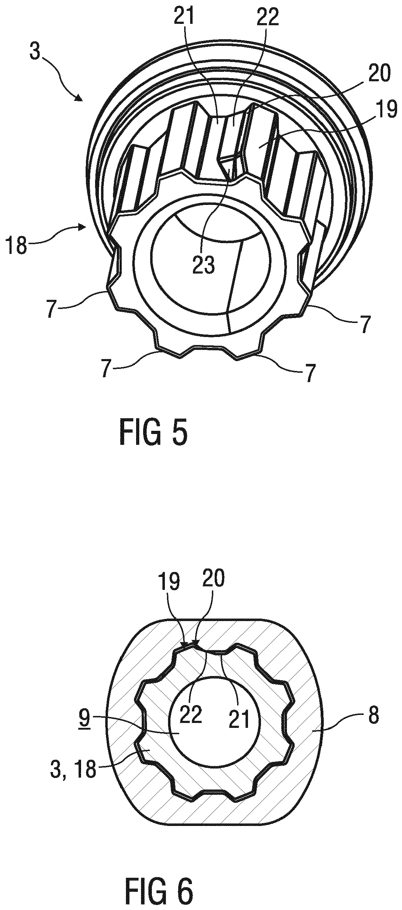

Das Formschlussmittel 3 ist in Form einer Keilwelle 18 ausgebildet, die in Figur 5 in perspektivischer Darstellung gezeigt ist.

Dabei sind am Außenumfang des keilwellenartig ausgeformten Formschlussmittels 3 eine Vielzahl von Zähnen 7 ausgebildet, welche in regelmäßigen Winkelabständen voneinander beabstandet sind.

Besonders bevorzugt weist ein Zahn 19 des Formschlussmittels 3 eine von den übrigen Zähnen 7 des Formschlussmittels 3 abweichende asymmetrische Geometrie und/oder Kontur auf, während die übrigen Zähne 7 eine symmetrische Geometrie und/oder Kontur aufweisen.

Dabei ist an einem Übergang zwischen einer Flanke 20 des Zahns 19 und einem Zahngrund 21 ein Übergangsbereich 22 derart ausgebildet, dass an diesem Zahn 19 eine verringerte Zahntiefe ausgebildet ist.

Der Übergangsbereich 22 ist als eine flächige Erweiterung eines herkömmlichen verrundeten Übergangs zwischen einer Flanke 20 und einem Zahngrund 21 der übrigen Zähne 7 ausgebildet. Diese flächige Erweiterung überragt somit die übliche Zahnflanke und bildet derart eine kraftschlüssige Verbindung, insbesondere Verpressung, mit der Aufnahme 8 des Sitzteils 4 aus, wodurch ein radiales Spiel der Verstelleinrichtung 1 reduziert ist.

Der Übergangsbereich 22 ist rampenförmig mit einem stirnseitigen Anstieg 23 ausgeformt. Bedingt durch den stirnseitigen Anstieg 23 ist ein Fügen des Formschlussmittels 3 in die Aufnahme 8 des Sitzteils 4 vereinfacht.

Die korrespondierend zum Formschlussmittel 3 ausgeformte Aufnahme 8 des Sitzteils 4 weist dabei eine symmetrische Geometrie und/oder Kontur auf. Dadurch ist eine kraftschlüssige Verbindung, insbesondere Verpressung, des Übergangsbereichs 22 des Zahns 19 mit der Aufnahme 8 des Sitzteils 4 ermöglicht.

Figur 6 zeigt schematisch eine Schnittdarstellung des Formschlussmittels 3 und der korrespondierenden Aufnahme 8. Im Bereich eines Zahns 19 weist eine Flanke 20 eine von den übrigen Zähnen 7 und von der Kontur der Aufnahme 8 abweichende Gestalt auf, so dass die Zahntiefe in diesem Bereich verringert ist. Beim Einsetzen der Keilwelle 18 in die Aufnahme 8 wird dieser Bereich verpresst und kompensiert Radialspiel.

Beim Fahrzeugsitz mit der Verstelleinrichtung 1 ist selbige erfindungsgemäß an zumindest einer Seite des Fahrzeugsitzes mit einer Sitzstruktur gekoppelt und an der gegenüberliegenden Seite des Fahrzeugsitzes ist ein herkömmliches Scharnier angeordnet. Dadurch ist eine Neigungsverstellung der Rückenlehne des Fahrzeugsitzes gegenüber dem Sitzteil 4 mittels einer einzelnen Verstelleinrichtung 1 ermöglicht, wodurch die Herstellungskosten reduzierbar sind.

### Bezugszeichenliste

- 1: Verstelleinrichtung
- 2: Beschlagteil
- 3: Formschlussmittel
- 4: Sitzteil
- 5: Achse
- 6: Klinkenmechanismus
- 7: Zahn
- 8: Aufnahme
- 9: Durchgangsbohrung
- 10: Sicherungseinrichtung
- 11: Stopfen
- 12: Teller
- 13: Vorsprung
- 14: Stopfen
- 15: Teller
- 16: Stift
- 17: Federmittel
- 18: Keilwelle
- 19: Zahn
- 20: Flanke
- 21: Zahngrund
- 22: Übergangsbereich
- 23: Anstieg
- A: axiale Richtung

## Patentansprüche

1. Verstelleinrichtung (1) für einen Fahrzeugsitz zur Neigungsverstellung einer Rückenlehne des Fahrzeugsitzes gegenüber einem Sitzteil (4), wobei ein Beschlagteil (2) ein am Außenumfang keilwellenartig ausgeformtes Formschlussmittel (3) umfasst, welches unter Ausbildung eines Drehformschlusses in eine korrespondierend ausgeformte Aufnahme (8) des Sitzteils (4) einschiebbar ist, wobei am Außenumfang des keilwellenartig ausgeformten Formschlussmittels (3) eine Vielzahl von Zähnen (7) ausgebildet ist, welche in regelmäßigen Winkelabständen voneinander beabstandet sind, **dadurch gekennzeichnet, dass** ein Zahn (19) eine von den übrigen Zähnen (7) des Formschlussmittels (3) abweichende asymmetrische Geometrie und/oder Kontur aufweist.

2. Verstelleinrichtung (1) nach Anspruch 1,
**dadurch gekennzeichnet, dass** das Beschlagteil (2) gestellfest form-, stoff- und/oder kraftschlüssig an der Rückenlehne des Fahrzeugsitzes angeordnet ist.

3. Verstelleinrichtung (1) nach Anspruch 1 oder 2,
**dadurch gekennzeichnet, dass** das Formschlussmittel (3) dreh- oder schwenkbar im Beschlagteil (2) gehalten und/oder gelagert ist.

4. Verstelleinrichtung (1) nach einem der vorherigen Ansprüche,
**dadurch gekennzeichnet, dass** Beschlagteil (2) und Aufnahme (8) des Sitzteils (4) derart am Fahrzeugsitz anordenbar sind, dass ein Einschieben des Formschlussmittels (3) in die Aufnahme (8) des Sitzteils (4) horizontal und quer zu einer Sitzrichtung erfolgt.

5. Verstelleinrichtung (1) nach einem der vorherigen Ansprüche,
**dadurch gekennzeichnet, dass** das Formschlussmittel (3) eine axial verlaufende Durchgangsbohrung (9) aufweist.

6. Verstelleinrichtung (1) nach Anspruch 5,
**dadurch gekennzeichnet, dass** in der Durchgangsbohrung (9) eine Sicherungseinrichtung (10) angeordnet ist, welche das Formschlussmittel (3) und die zugeordnete Aufnahme (8) nach dem Fügen hinsichtlich ihrer axialen Lage zueinander form- und/oder kraftschlüssig fixiert.

7. Verstelleinrichtung (1) nach Anspruch 5 oder 6,
**dadurch gekennzeichnet, dass** die Sicherungseinrichtung (10) aus zwei ineinander verrastbaren Stopfen (11, 14) gebildet ist, welche von verschiedenen Seiten in die Durchgangsbohrung (9) eingeführt und anschließend verrastet sind.

8. Verstelleinrichtung (1) nach einem der vorhergehenden Ansprüche, **dadurch gekennzeichnet, dass** die übrigen Zähne (7) eine symmetrische Geometrie und/oder Kontur aufweisen.

9. Verstelleinrichtung (1) nach einem der vorherigen Ansprüche, **dadurch gekennzeichnet, dass** an einem Übergang zwischen einer Flanke (20) des Zahns (19) und einem Zahngrund (21) ein Übergangsbereich (22) derart ausgebildet ist, dass an diesem Zahn (19) eine verringerte Zahntiefe ausgebildet ist.

10. Verstelleinrichtung (1) nach Anspruch 9,
**dadurch gekennzeichnet, dass** der Übergangsbereich (22) als eine flächige Erweiterung eines verrundeten Übergangs zwischen einer Flanke (20) und einem Zahngrund (21) der übrigen Zähne (7) ausgebildet ist.

11. Verstelleinrichtung (1) nach Anspruch 9 oder 10,
**dadurch gekennzeichnet, dass** der Übergangsbereich (22) rampenförmig mit einem stirnseitigen Anstieg (23) ausgeformt ist.

12. Verstelleinrichtung (1) nach einem der vorherigen Ansprüche,
**dadurch gekennzeichnet, dass** die korrespondierend zum Formschlussmittel (3) ausgeformte Aufnahme (8) des Sitzteils (4) eine symmetrische Geometrie und/oder Kontur aufweist.

13. Fahrzeugsitz mit einer Verstelleinrichtung (1) nach einem der Ansprüche 1 bis 12,
**dadurch gekennzeichnet, dass** die Verstelleinrichtung (1) an zumindest einer Seite des Fahrzeugsitzes mit einer Sitzstruktur gekoppelt ist und an der gegenüberliegenden Seite des Fahrzeugsitzes ein Scharnier zwischen Rückenlehne und Sitzteil (4) angeordnet ist.

## Claims

1. Adjusting device (1) for a vehicle seat for the adjustment of the tilt of a backrest of the vehicle seat with respect to a seating part (4), wherein a fitting part (2) comprises a form-fitting means (3) which is formed in the manner of a splined shaft on the outer circumference and can be pushed into a correspondingly formed receptacle (8) of the seating part (4) with the configuration of a rotary form-fitting connection, a plurality of teeth (7) which are spaced apart from one another at regular angular spacings being configured on the outer circumference of the form-fitting means (3) which is formed in the manner of a splined shaft, **characterized in that** one tooth (19) has an asymmetrical geometry and/or contour which differs from the remaining teeth (7) of the form-fitting means (3).

2. Adjusting device (1) according to Claim 1, **characterized in that** the fitting part (2) is arranged in a form-fit manner, by a material bond and/or force-fit manner on the backrest of the vehicle seat in a manner which is fixed to the frame.

3. Adjusting device (1) according to Claim 1 or 2, **characterized in that** the form-fitting means (3) is held and/or mounted rotatably or pivotably in the fitting part (2).

4. Adjusting device (1) according to one of the preceding claims, **characterized in that** the fitting part (2) and the receptacle (8) of the seating part (4) are arrangeable on the vehicle seat in such a way that pushing of the positively locking means (3) into the receptacle (8) of the seating part (4) takes place horizontally and transversely with respect to a seating direction.

5. Adjusting device (1) according to one of the preceding claims, **characterized in that** the form-fitting means (3) has an axially running through bore (9).

6. Adjusting device (1) according to Claim 5, **characterized in that** a securing device (10) is arranged in the through bore (9), which securing device (10) fixes the form-fitting means (3) and the associated receptacle (8) in a form-fit and/or force-fit manner with regard to their axial position with respect to one another after the joining.

7. Adjusting device (1) according to Claim 5 or 6, **characterized in that** the securing device (10) is formed from two plugs (11, 14) which can be latched into one another, which are introduced from different sides into the through bore (9), and are subsequently latched.

8. Adjusting device (1) according to one of the preceding claims, **characterized in that** the remaining teeth (7) have a symmetrical geometry and/or contour.

9. Adjusting device (1) according to one of the preceding claims, **characterized in that** a transition region (22) is configured at the transition between a flank (20) of the tooth (19) and a tooth base (21) in such a way that a reduced tooth depth is configured on the said tooth (19).

10. Adjusting device (1) according to Claim 9, **characterized in that** the transition region (22) is configured as a flat extension of a rounded transition between a flank (20) and a tooth base (21) of the remaining teeth (7).

11. Adjusting device (1) according to Claim 9 or 10, **characterized in that** the transition region (22) is formed in a ramp-shaped manner with an end-side upward slope (23).

12. Adjusting device (1) according to one of the preceding claims, **characterized in that** the receptacle (8) of the seating part (4), which receptacle (8) is formed in a corresponding manner with respect to the form-fitting means (3), has a symmetrical geometry and/or contour.

13. Vehicle seat having an adjusting device (1) according to one of Claims 1 to 12, **characterized in that** the adjusting device (1) is coupled to a seat structure on at least one side of the vehicle seat, and a hinge is arranged between the backrest and the seating part (4) on the opposite side of the vehicle seat.

## Revendications

1. Dispositif de réglage (1) pour un siège de véhicule destiné au réglage de l'inclinaison d'un dossier du siège de véhicule par rapport à une partie de siège (4), une partie de ferrure (2) comprenant un moyen de complémentarité de formes (3) formé à la façon d'un arbre à cannelures au niveau de la périphérie extérieure et pouvant être inséré dans un logement (8) de forme correspondante de la partie de siège (4) par formation d'une complémentarité de formes en rotation, une pluralité de dents (7) étant réalisée au niveau de la périphérie extérieure du moyen de complémentarité de formes (3) formé à la façon d'un arbre à cannelures, ces dents étant espacées selon des écartements angulaires réguliers les unes par rapport aux autres, **caractérisé en ce qu'**une dent (19) présente une géométrie et/ou un contour asymétriques s'écartant du reste des dents (7) du moyen de complémentarité de formes (3).

2. Dispositif de réglage (1) selon la revendication 1, **caractérisé en ce que** la partie de ferrure (2) est disposée au niveau du dossier du siège de véhicule, fixement par rapport au châssis, par complémentarité de forces, de formes et/ou de matières.

3. Dispositif de réglage (1) selon la revendication 1 ou 2, **caractérisé en ce que** le moyen de complémentarité de formes (3) est maintenu et/ou disposé de façon à pouvoir tourner ou pivoter dans la partie de ferrure (2).

4. Dispositif de réglage (1) selon l'une quelconque des revendications précédentes, **caractérisé en ce que** la partie de ferrure (2) et le logement (8) de la partie de siège (4) peuvent être agencés de telle sorte au niveau du siège de véhicule qu'une insertion du moyen de complémentarité de formes (3) dans le logement (8) de la partie de siège (4) s'effectue de façon horizontale et transversale par rapport à la direction du siège.

5. Dispositif de réglage (1) selon l'une quelconque des revendications précédentes, **caractérisé en ce que** le moyen de complémentarité de formes (3) comporte un alésage traversant (9) s'étendant dans le plan axial.

6. Dispositif de réglage (1) selon la revendication 5, **caractérisé en ce qu'**un dispositif de protection (10) est disposé dans l'alésage traversant (9), ce dispositif fixant entre eux après assemblage le moyen de complémentarité de formes (3) et le logement (8) associés par complémentarité de formes et/ou de forces dans leur position axiale.

7. Dispositif de réglage (1) selon la revendication 5 ou 6, **caractérisé en ce que** la fixation (10) est formée de deux bouchons (11, 14) pouvant être encliquetés l'un dans l'autre, ces bouchons étant introduits puis encliquetés dans l'alésage traversant (9), depuis différents côtés.

8. Dispositif de réglage (1) selon l'une quelconque des revendications précédentes, **caractérisé en ce que** les dents (7) restantes présentent une géométrie et/ou un contour symétriques.

9. Dispositif de réglage (1) selon l'une quelconque des revendications précédentes, **caractérisé en ce qu'**une zone de transition (22) est réalisée de telle sorte au niveau d'une transition entre un flanc (20) de la dent (19) et une base de dent (21) qu'une profondeur de dent réduite est réalisée au niveau de cette dent (19).

10. Dispositif de réglage (1) selon la revendication 9, **caractérisé en ce que** la zone de transition (22) est réalisée sous la forme d'un élargissement plat d'une transition arrondie entre un flanc (20) et une base de dent (21) des dents (7) restantes.

11. Dispositif de réglage (1) selon la revendication 9 ou 10, **caractérisé en ce que** la zone de transition (22) est réalisée en forme de rampe avec une pente montante (23) du côté avant.

12. Dispositif de réglage (1) selon l'une quelconque des revendications précédentes, **caractérisé en ce que** le logement (8) formé de façon correspondante au moyen de complémentarité de formes (3) de la partie de siège (4) présente une géométrie et/ou un contour symétriques.

13. Siège de véhicule avec un dispositif de réglage (1) selon l'une quelconque des revendications 1 à 12, **caractérisé en ce que** le dispositif de réglage (1) est couplé à une structure de siège au niveau d'au moins un côté du siège de véhicule et qu'une charnière est disposée entre le dossier et la partie de siège (4) au niveau du côté opposé du siège de véhicule.
